# EUROPEAN PATENT SPECIFICATION

(11) **EP 0 358 793 B1**
(45) Date of publication and mention of the grant of the patent: **24.11.1993**
(21) Application number: 88115012.2
(22) Date of filing: 14.09.1988
(51) Int. Cl.: G21C 17/08

(54) **A cooling device for protecting an elongated apparatus against a hot environment**
Kühlvorrichtung zum Schutz eines länglichen Apparates gegen eine heisse Umgebung
Dispositif de refroidissement protégeant un appareil allongé contre un environnement chaud

(43) Date of publication of application: 21.03.1990
(73) Proprietor: EUROPEAN ATOMIC ENERGY COMMUNITY (EURATOM), L-2920 Luxembourg (LU)
(72) Inventor: Raimondi, Tullio, Abingdon Oxon (GB); Businaro, Tiziano Vinicio, I-00189 Roma (IT); Cusack, Rodney, Newbury Berks (GB)
(74) Representative: Weinmiller, Jürgen

(56) References cited:
- DE-A- 2 811 110
- DE-U- 8 316 124
- FR-A- 2 094 294
- GB-A- 906 406
- GB-A- 2 127 174

## Description

The invention refers to a cooling device for protecting an elongated apparatus against a hot environment by means of a coolant fluid circulating around the apparatus. The invention applies in particular to cooling a TV camera located at the inner end of a vessel inspection tube.

In many industrial applications, TV cameras are used for the remote supervision of the inside of vessels submitted to vacuum, radiation and/or high temperature. This is the case for example in fusion experiments carried out in a torus-shaped vacuum vessel. As may be seen from the document Fusion Technology, Vol. 11, Jan. 1987, pages 277 to 281, the TV camera is housed at the lower end of a long metal tube which terminates in a glass cylinder. The camera is lowered into the vessel by a carriage suspended at the upper vessel wall, the vacuum barrier being constituted by long bellows allowing for the vertical stroke of the camera.

Until now, the inspection of the vessel could take place only if the vessel temperature was sufficiently low for the temperature tolerated by the TV camera. Thus, the vessel could not be inspected immediately after a fusion experiment as the temperature inside the vessel is as high as 350°C, whereas the camera temperature should not exceed 40°C.

It should be noted that due to the size of the vessel and its surrounding protective walls, the length of the tube in which the camera is housed amounts to 4 m and more, which renders classical heat shielding solutions inapplicable. Such solutions are for example double-walled containers with the interspace between the walls being evacuated, or a mineral wool package around the sensitive apparatus. Without such a package, a coolant fluid flow alone would not have the desired effect, as this fluid would become heated up along its long way to the camera.

The document D1:DE-U-8 316 124 discloses a cooling device for protecting a TV camera by means of a coolant fluid circulating around the apparatus between three tubular concentric metal sheaths. The coolant is introduced between the middle and the internal sheath, the middle sheath being provided at its extremities with openings to allow the coolant access between the middle and the external sheath.

It is the main object of the invention to provide for a cooling device which protects an elongated apparatus against a hot environment by means of a coolant fluid circulating around the apparatus and which is able to keep the camera at a temperature below 35°C while the environment temperature is 350°C. A further object of the invention is to provide a minimum of bulk for this device, to be applicable to elongated apparatus of considerable length, for example 4 m, and to withstand a nuclear radiation in the environment.

These objects are achieved in accordance with the invention by the fact that the device includes
- two tubular concentric metal sheaths disposed coaxially around the elongated apparatus, the interspace between the sheaths being closed at a first end thereof and a coolant inlet and a coolant outlet being associated to a second end thereof,
- a plurality of parallel coolant fluid tubes extending from said second end to a level at a short distance from the first end, the axes of these tubes being parallel to that of the sheaths and being regularly distributed in said interspace, the outer diameter of said tubes corresponding to the radial width of said interspace, and the coolant fluid inlet being coupled to the assembly of said tubes at the second end, whereas the coolant outlet is coupled at said second end to said interspace outside said tubes.

As far as preferred embodiments of the invention are concerned, reference is made to the dependent claims.

The invention will now be described in detail in relation to a preferred embodiment thereof and to the accomanying drawings.

Fig. 1 shows a cut through a viewing system in a torus vessel of a fusion experiment incorporating the device according to the invention.

Fig. 2 is a cut view along line II-II in figure 1 drawn to an enlarged scale.

The entire viewing system is enclosed in a vertical stainless steel tube 1, the lower end of which bears a viewing glass cylinder 2 and the upper end of which is connected to a bellow 3. The tube 1 can be moved vertically from a position in which the viewing glass cylinder 2 is retracted from the vessel and a position in which it penetrates into the vessel. Due to the bellow 3, the inside of the tube 1 is always sealed against the vacuum of the vessel 4.

The tube 1 of about 4 m length contains in the lower part a TV camera 5 and some lenses 6 as well as a prism 7 and a light source 8 in the same manner as described in the above cited prior art (Fusion Technology, Vol. 11, January 1987). These components can be controlled in operation by motors such as 9 via control signals transmitted through an electric cable 10 from the upper end of the tube 1. There might further be provided air cooling means for the camera in order to withdraw heat radiated through the glass cylinder towards the camera. The air is made to pass through between two windows 23 and 24 located in front of the lens 6.

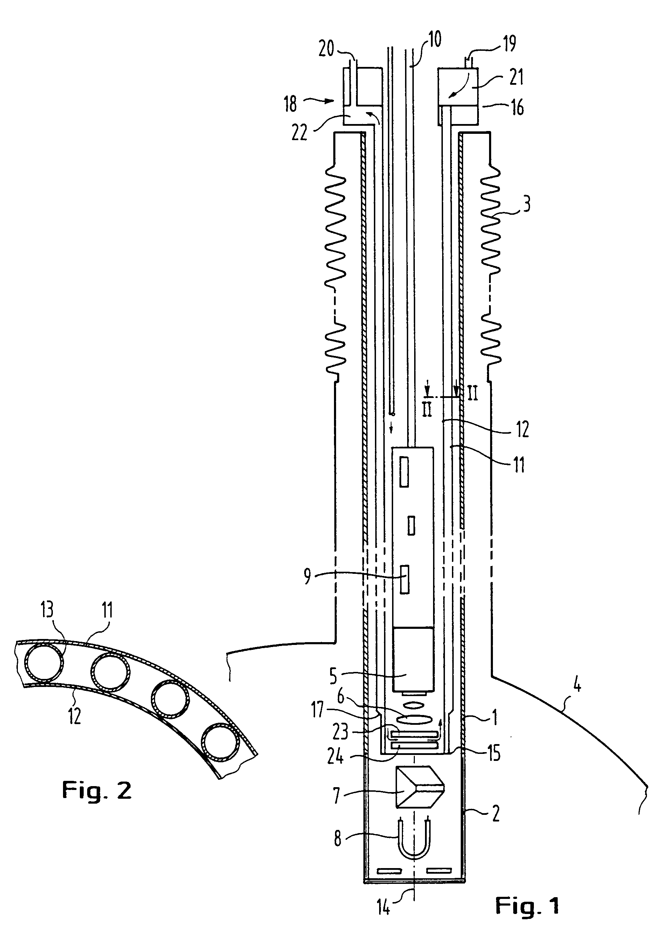

The device for cooling the camera against the high temperature in the vessel 4 consists of two concentric tubular metal sheaths 11 and 12 and of a plurality of small metal tubes 13 disposed therebetween as shown in greater detail in fig. 2. The sheaths and the small tubes are made of stainless steel. The sheaths 11 and 12 are concentric with respect to the axis 14 of the tube 1 and extend over nearly the entire length of said tube between a first end 15 at the level of the transition between the stainless steel tube 1 and the viewing glass cylinder 2, and a second end 16 above the bellow 3. The outer diameter of the small tubes 13 is selected so that these tubes fit closely in the interspace between the two sheaths 11 and 12. The outer sheath presents near its first end a shoulder 17 allowing the ends of the tubes 13 to abut thereagainst. The axes of the tubes 13 are all parallel to the axis 14 of tube 1 and their distance corresponds to at least three times their outer diameter in order to divide the entire interspace between the sheaths 11 and 12 into two areas of approximately equal total cross-section, the first area being defined by the inner cross-section of all the small tubes 13 and the second by the remaining space in said interspace outside said tubes 13.

The interspace between both sheaths 11, 12 is closed tightly at the first end below the shoulder 17. At the second end 16, the two sheaths are surmounted by a collector and distributor head 18 for a coolant fluid such as water. This head comprises a water inlet 19 and a water outlet 20 and is divided into two spaces 21 and 22, the first one coupled to the inlet 19 on the one side and to the small tubes 13 on the other side, and the other one coupled to the outlet 20 on the one side and to the interspace between the sheaths 11 and 12 on the other side.

The device operates as follows:
The cooling water fed to the inlet 19 flows towards the first end 15 inside the small tubes 13 and returns through the space therebetween. Due to the fact that only line contact exists between the tubes 13 and the outer sheath 11, the coolant water is heated up only to a very small extent from the hot environment inside the vessel 4 during its way down in the tubes 13. At the lower end of the small tubes 13 (at the level of the shoulder 17), the cold water leaves the small tubes and begins to flow upwards while carrying heat away, thus keeping the temperature especially in the lower part of the device close to the first end 15 at a very low level.

Practical results can be reported relating to a 4 m long device including an outer sheath 11 of 44,4 mm in diameter, an inner sheath 12 of 38,1 mm in diameter and 22 small tubes 13 therebetween of 3 mm in diameter. If water at a flow rate of 6 l/min and 18°C is fed into the inlet 19 and the temperature in the vessel is about 350°C, the camera is kept at a temperature of 35°C without any additional cooling air flow inside the camera. The resulting pressure drop between inlet 19 and outlet 20 has been measured to be only about 100 mbar. But in this particular case, the system is able to support 7 bars.

The invention is not restricted to the embodiment shown in the drawings. The cooling device can be applied to other elongated apparatus and to other environments than fusion experiment vessels.

The small tubes can be kept in place between the two sheaths by means of soldering or only by friction, as they do not support any distorsion efforts and as even a slight displacement of one of the tubes does not affect the correct functioning of the device. The entire device according to the invention can be made integral with the elongated apparatus to be protected or else constitute an individual cooling jacket fastened to the outer tube 1.

## Claims

1. A cooling device for protecting an elongated apparatus against a hot environment by means of a coolant fluid circulating around the apparatus (5, 6, 9) characterized in that the device includes
- two tubular concentric metal sheaths (11, 12) disposed coaxially around the elongated apparatus (5, 6, 9), the interspace between the sheaths being closed at a first end (15) thereof and a coolant inlet (19) and a coolant outlet (20) being associated to a second end thereof (16),
- a plurality of parallel coolant fluid tubes (13) extending from said second end (16) to a level at a short distance from the first end (15), the axes of these tubes being parallel to that (14) of the sheaths (11, 12) and being regularly distributed in said interspace, the outer diameter of said tubes corresponding to the radial width of said interspace, and the coolant fluid inlet (19) being coupled to the assembly of said tubes (13) at the second end (16), whereas the coolant outlet (20) is coupled at said second end (16) to said interspace outside said tubes (13).

2. A cooling device according to claim 1, characterized in that at least one of the sheaths (11) presents a shoulder (17) at said level a short distance away from the first end (15) for allowing the ends of the tubes (13) to abut thereagainst.

3. A cooling device according to any of the preceding claims, characterized in that the coolant fluid is water.

## Patentansprüche

1. Kühlvorrichtung zum Schutz eines länglichen Geräts vor einer heißen Umgebung mittels eines Kühlfluids, das um das Gerät (5, 6, 9) zirkuliert, dadurch gekennzeichnet, daß die Vorrichtung enthält
- zwei rohrförmige konzentrische Metallhüllen (11, 12), die koaxial um das längliche Gerät (5, 6, 9) angeordnet sind, wobei der Zwischenraum zwischen den Hüllen an einem ersten ihrer Enden (15) verschlossen ist und ein Kühlfluideinlaß (19) und ein Kühlfluidauslaß (20) einem zweiten ihrer Enden (16) zugeordnet sind,
- eine Vielzahl von parallelen Kühlfluidrohren (13), die sich von diesem zweiten Ende (16) bis zu einem Niveau in kurzem Abstand vom ersten Ende (15) erstrecken, wobei die Achsen dieser Rohre parallel zu der (14) der Hüllen (11, 12) und regelmäßig in diesem Zwischenraum verteilt sind, wobei der Außendurchmesser der dünnen Rohre der radialen Weite des Zwischenraums entspricht und der Kühlfluideinlaß (19) an die Gesamtheit dieser Rohre (13) am zweiten Ende (16) gekoppelt ist, während der Kühlfluidauslaß (20) an diesem zweiten Ende (16) an den Zwischenraum außerhalb dieser Rohre (13) gekoppelt ist.

2. Kühlvorrichtung nach Anspruch 1, dadurch gekennzeichnet, daß mindestens eine der Hüllen (11) eine Schulter (17) auf dem erwähnten Niveau knapp vor dem ersten Ende (15) aufweist, die als Anschlag für die Enden der Rohre (13) wirkt.

3. Kühlvorrichtung nach einem beliebigen der vorhergehenden Ansprüche, dadurch gekennzeichnet, daß das Kühlfluid Wasser ist.

## Revendications

1. Dispositif de refroidissement pour protéger un appareil oblong contre un environnement chaud à l'aide d'un fluide de refroidissement circulant autour de l'appareil (5, 6, 9), caractérisé en ce que le dispositif comprend
- deux enveloppes métalliques tubulaires concentriques (11, 12) disposées coaxialement autour de l'appareil oblong (5, 6, 9), l'interspace entre les enveloppes étant fermé à une première extrémité (15) et une entrée de fluide de refroidissement (19) et une sortie de fluide de refroidissement (20) étant associées à une seconde extrémité (16),
- une pluralité de tubulures parallèles (13) de fluide de refroidissement s'étendant de ladite seconde extrémité (16) à un niveau à une courte distance de la première extrémité (15), les axes de ces tubulures étant parallèles à l'axe (14) des enveloppes (11, 12) et étant répartis régulièrement dans ledit interspace, le diamètre extérieur desdites tubulures correspondant à la largeur radiale dudit interspace, et l'entrée de fluide de refroidissement (19) étant couplée à l'ensemble desdites tubulures (13) à la seconde extrémité (16) tandis que la sortie de fluide de refroidissement (02) est couplée à ladite seconde extrémité (16) audit interspace à l'extérieur desdites tubulures (13).

2. Dispositif de refroidissement selon la revendication 1, caractérisé en ce que au moins une des enveloppes (11) présente un épaulement (17) au niveau situé à une courte distance de la première extrémité (15) pour permettre aux extrémités des tubulures (13) d'y venir en butée.

3. Dispositif de refroidissement selon l'une quelconque des revendications précédentes, caractérisé en ce que le fluide de refroidissement est de l'eau.
